(19) Europäisches Patentamt
European Patent Office
Office européen des brevets

(11) **EP 4 354 535 A1**

(12) **EUROPEAN PATENT APPLICATION**
published in accordance with Art. 153(4) EPC

(43) Date of publication:
**17.04.2024 Bulletin 2024/16**

(21) Application number: **23812074.5**

(22) Date of filing: **19.05.2023**

(51) International Patent Classification (IPC):
*H01M 4/13* (2010.01)   *H01M 4/04* (2006.01)
*H01M 4/62* (2006.01)   *H01M 4/64* (2006.01)
*H01M 10/052* (2010.01)   *H01M 4/02* (2006.01)

(52) Cooperative Patent Classification (CPC):
**H01M 4/02; H01M 4/04; H01M 4/13; H01M 4/62;
H01M 4/64; H01M 10/052**

(86) International application number:
**PCT/KR2023/006834**

(87) International publication number:
**WO 2023/229300 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.05.2022 KR 20220063560
15.05.2023 KR 20230062526**

(71) Applicant: **LG Chem, Ltd.
Yeongdeungpo-gu
Seoul 07336 (KR)**

(72) Inventors:
• **LEE, Su Hee**
**Daejeon 34122 (KR)**
• **JIN, Sun Mi**
**Daejeon 34122 (KR)**
• **YU, Tae Sun**
**Daejeon 34122 (KR)**

(74) Representative: **Hoffmann Eitle
Patent- und Rechtsanwälte PartmbB
Arabellastraße 30
81925 München (DE)**

(54) **ELECTRODE FOR LITHIUM SECONDARY BATTERY AND LITHIUM SECONDARY BATTERY COMPRISING SAME**

(57) Provided is an electrode for a lithium secondary battery comprising an electrode portion that includes a current collector, an electrode layer formed on the current collector, and an insulating layer formed on the electrode layer. The electrode further comprises a coating member that includes a first coating region in contact with a side surface of the electrode portion and a second coating region that continues to the first coating region and makes contact with a portion of the insulating layer.

【FIG. 1】

EP 4 354 535 A1

**Description**

CROSS-REFERENCE TO RELATED APPLICATION(S)

This application is a national phase entry under 35 U.S.C. § 371 of International Appl. No. PCT/KR2023/006834, filed on May 19, 2023, which claims priority from Korean Patent Application No. 10-2022-0063560 filed on May 24, 2022 and Korean Patent Application No. 10-2023-0062526 filed on May 15, 2023, all the disclosures of which are incorporated herein by reference in their entirety.

**[TECHNICAL FIELD]**

The present disclosure relates to an electrode for a lithium secondary battery that can ensure the insulation properties of the electrode edge and thus prevent defects due to short circuits during cell assembly, and a lithium secondary battery including the same.

**[BACKGROUND ART]**

As the development of a technology and the demand for a mobile device have increased, the demand for a chargeable/dischargeable secondary battery as an energy source has rapidly increased, and various research into secondary batteries capable of meeting various needs has been carried out accordingly. Also, a chargeable/dischargeable secondary battery has attracted considerable attention as a power source for an electric vehicle (EV), a hybrid electric vehicle (HEV), a plug-in hybrid electric vehicle (Plug-in HEV) and the like, which have been developed to solve air pollution and the like, caused by existing gasoline and diesel vehicles using fossil fuel.

Lithium secondary batteries explode with intense heat generation if a short circuit occurs due to contact between the cathode and the anode. The porous separator of the secondary batteries exhibits extreme heat shrinkage behavior at temperatures of about 100°C or more due to material characteristics and manufacturing process characteristics including stretching, which causes the problem that a short circuit occurs between the cathode and the anode. In order to solve such battery safety issues, a separator has been proposed in which a porous coating layer formed of a mixture of insulating filler particles and a binder polymer is provided on a porous substrate, and a material having a shutdown function is added to the porous coating layer.

However, in the case of a conventional separator configured to form a porous coating layer having inorganic particles on a porous substrate, there are problems that it does not have a separate adhesive layer and thus, the interfacial adhesive force with the counter electrode is weak, which deteriorates the processability of the battery assembly, and further the expansion and contraction of the electrodes causes the interfacial peeling due to insufficient adhesive force, which deteriorate the life characteristics of the battery.

In addition, when punching an electrode portion coated with an insulating layer based on a highly heat-resistant material, there was a problem that a desorption phenomenon occurred at the edge portion and the possibility of short circuit is high.

Therefore, there is a need to study a lithium secondary battery that can realize excellent insulation properties and prevent cell short circuits.

**[DETAILED DESCRIPTIONS]**

**[Technical Problem]**

It is an object of the present disclosure to provide an electrode for lithium secondary batteries that can realize high insulation characteristic and low resistance characteristic.

It is another object of the present disclosure to provide a method for manufacturing the electrode for a lithium secondary battery.

It is yet another object of the present disclosure to provide a lithium secondary battery comprising the electrode for a lithium secondary battery.

**[Technical Solution]**

According to one aspect of the present invention, there is provided an electrode for a lithium secondary battery comprising: an electrode portion that includes a current collector, an electrode layer formed on the current collector, and an insulating layer formed on the electrode layer, and further comprising: a coating member that includes a first coating region in contact with a side surface of the electrode portion and a second coating region that continues to the first coating region and makes contact with a portion of the insulating layer.

According to another aspect of the present invention, there is provided a lithium secondary battery, comprising the above-mentioned electrode for a lithium secondary battery; and a second electrode portion formed on the electrode for a lithium secondary battery.

Now, an electrode for a lithium secondary battery, a lithium secondary battery including the same, and the like according to embodiments of the invention will be described in detail.

Terms or words used in the present specification and claims should not be construed as limited to ordinary or dictionary terms, and the present invention should be construed with meanings and concepts that are consistent with the technical idea of the present invention based on the principle that the inventors may appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon', 'above', 'below', and 'next to', one or more portions may be arranged between two other portions unless 'just' or 'direct' is used.

In describing a time relationship, for example, when the temporal order is described as 'after', 'subsequent', 'next', and 'before', a case which is not continuous may be included unless 'just' or 'direct' is used.

As used herein, the term 'at least one' should be understood to include any and all combinations of one or more of the associated listed items.

According to one embodiment of the present invention, there is provided an electrode for a lithium secondary battery comprising: an electrode portion that includes a current collector, an electrode layer formed on the current collector, and an insulating layer formed on the electrode layer, and further comprising: a coating member that includes a first coating region in contact with a side surface of the electrode portion and a second coating region that continues to the first coating region and makes contact with a portion of the insulating layer.

Conventional lithium secondary batteries have problems that as the separator interposed between the cathode and the anode includes a porous substrate and a coating layer formed on the porous substrate, it does not have a separate adhesive layer and thus, the interfacial adhesive force with the counter electrode is weak, which deteriorates the processability of the battery assembly, and further the expansion and contraction of the electrodes causes the interfacial peeling due to insufficient adhesive force, which deteriorate the life characteristics of the battery and causes defects due to short circuits during cell assembly.

Thus, the present inventors have found through experiments that as the separator used in the lithium secondary battery is formed directly on the cathode or the anode without a porous substrate, the adhesive force is maintained even if the electrode expands and contracts, thereby realizing excellent battery life characteristics, and completed the disclosure. The present inventors also confirmed that inorganic fine particles with high heat resistance are directly coated onto the electrode to form an insulating layer with a separator function, thereby preventing short-circuiting of the electrode without deformation or shrinkage even at high temperatures.

In addition, the present inventors have found through experiments that the electrode for a lithium secondary battery according to the present disclosure includes a protective layer formed on the edge of the electrode portion, thereby preventing cell short circuits even if there is a slight distortion during cell assembly, and completed the disclosure. Furthermore, the present inventors have found through experiments that as the electrode for a lithium secondary battery according to the present disclosure includes a protective layer formed on the edge of the electrode portion, the side reaction between the anode unevenly exposed on the side surface portion and the electrolyte can be minimized, and excellent coulombic efficiency is achieved, thereby preventing loss of discharge capacity, and completed the disclosure.

Specifically, the electrode for a lithium secondary battery of one embodiment may comprise an electrode portion 100 including a current collector 101, an electrode layer 102 formed on the current collector and an insulating layer 103 formed on the electrode layer, and further comprise a coating member that includes a first coating region 10 in contact with a side surface of the electrode portion and a second coating region 20 that continues to the first coating region and makes contact with a portion of the insulating layer.

The electrode for a lithium secondary battery includes a coating member formed on the edge of the electrode portion as mentioned above, thereby preventing cell short circuits even if there is a slight distortion during cell assembly.

Specifically, the coating member may include a first coating region in contact with a side surface of the electrode portion and a second coating region that continues to the first coating region and makes contact with a portion of the insulating layer.

The first coating region may be in contact with a part of the side surface of the electrode portion, or may be in contact with a part or the entire area thereof.

The specific shape or structure of the coating member is not particularly limited, and may vary depending on the specific shape or structure of the electrode portion.

For example, as the coating member includes a first coating region in contact with the side surface of the electrode portion and a second coating region that continues to the first coating region and makes contact with a portion of the insulating layer, it may have a shape that surrounds a side surface of the electrode portion including one surface of the current collector, the electrode layer, and the insulating layer and a part of the upper surface of the insulating layer.

When the coating member has a shape that surrounds a side surface of the electrode portion including one surface of the current collector, the electrode layer, and the insulating layer and a part of the upper surface of the insulating layer, a direction of a first coating region in contact with a side surface of the electrode part and a direction of a second coating region in contact with a portion of the insulating layer in the cross section of the coating member may form an angle of 60° or more and 120° or less, 80° or more and 100° or less, preferably 90°.

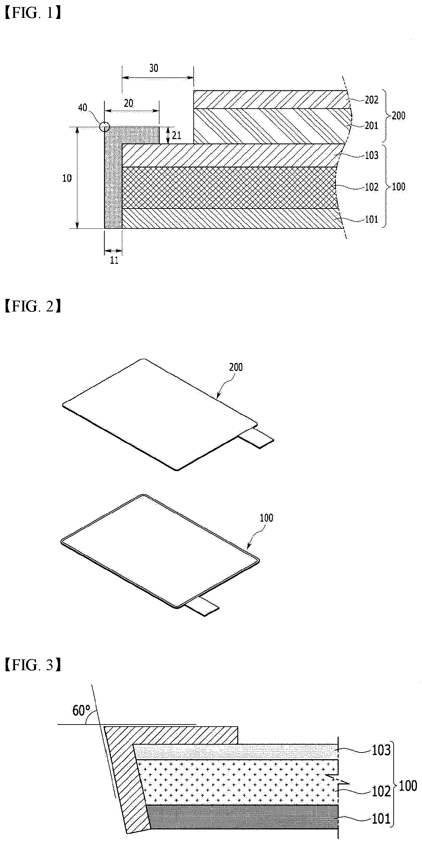

When the direction of the first coating region in contact with the side surface of the electrode portion and the direction of the second coating region in contact with a portion of the insulating layer in the cross section of the coating member form an angle of 60°, it can be shown as in FIG. 3.

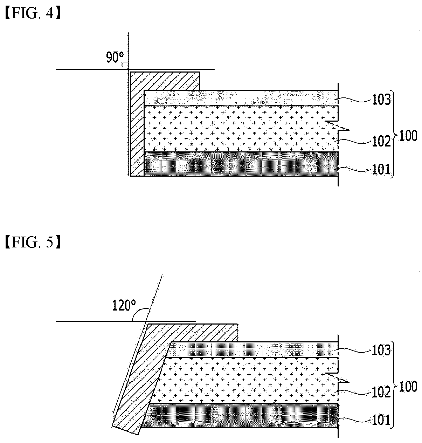

When the direction of the first coating region in contact with the side surface of the electrode portion and the direction of the second coating region in contact with a portion of the insulating layer in the cross section of the coating member form an angle of 90°, it can be shown as in FIG. 4.

When the direction of the first coating region in contact with the side surface of the electrode portion and the direction of the second coating region in contact with a portion of the insulating layer in the cross section of the coating member form an angle of 120°, it can be shown as in FIG. 5.

In the electrode for a lithium secondary battery, the thickness of the first coating region measured from the side surface of the electrode portion may be 1 $\mu$m or more and 100 $\mu$m or less.

In the electrode for a lithium secondary battery, the thickness of the first coating region measured from the side surface of the electrode portion means 11 of FIG. 1.

Specifically, in the electrode for a lithium secondary battery, the thickness of the first coating region measured from the side surface of the electrode portion may be 1 $\mu$m or more, 5 $\mu$m or more, 10 $\mu$m or more, 14 $\mu$m or more, or 100 $\mu$m or less, 80 $\mu$m or less, 75 $\mu$m or less, 50 $\mu$m or less, 30 $\mu$m or less, 20 $\mu$m or less, or 1 $\mu$m or more and 100 $\mu$m or less, 1 $\mu$m or more and 80 $\mu$m or less, 1 $\mu$m or more and 75 $\mu$m or less, 1 ,um or more and 50 $\mu$m or less, 1 $\mu$m or more and 30 $\mu$m or less, 1 $\mu$m or more and 20 $\mu$m or less, 5 $\mu$m or more and 100 $\mu$m or less, 5 $\mu$m or more and 80 $\mu$m or less, 5 ,um or more and 75 $\mu$m or less, 5 $\mu$m or more and 50 $\mu$m or less, 5 $\mu$m or more and 30 $\mu$m or less, 5 $\mu$m or more and 20 $\mu$m or less, 10 $\mu$m or more and 100 $\mu$m or less, 10 $\mu$m or more and 80 $\mu$m or less, 10 $\mu$m or more and 75 $\mu$m or less, 10 $\mu$m or more and 50 $\mu$m or less, 10 $\mu$m or more and 30 $\mu$m or less, 10 $\mu$m or more and 20 $\mu$m or less, 14 $\mu$m or more and 100 $\mu$m or less, 14 $\mu$m or more and 80 $\mu$m or less, 14 $\mu$m or more and 75 $\mu$m or less, 14 $\mu$m or more and 50 $\mu$m or less, 14 $\mu$m or more and 30 $\mu$m or less, or 14 $\mu$m or more and 20 $\mu$m or less

When the thickness of the first coating region measured from the side surface of the electrode portion is less than 1 $\mu$m, insulation properties may decrease and the risk of short circuit may increase. When the thickness is more than 100 $\mu$m, there may be a technical problem that energy density decreases due to the increase in volume during production of the stack cell.

Also, in the above embodiment, the thickness of the second coating region measured from the interface with the insulating layer may be more than or equal to 1 $\mu$m and less than or equal to the thickness of the second electrode portion.

In the lithium secondary battery electrode, the thickness of the second coating region measured from the interface with the insulating layer means 21 in FIG. 1.

For example, the thickness of the second coating region measured from the interface with the insulating layer may be 1 $\mu$m or more and 500 $\mu$m or less.

Specifically, the thickness of the second coating region measured from the interface with the insulating layer in the lithium secondary battery electrode may be 1 $\mu$m or more, 5 $\mu$m or more, 10 $\mu$m or more, 15 $\mu$m or more, or 500 $\mu$m or less, 100 $\mu$m or less, 80 $\mu$m or less, 75 $\mu$m or less, 50 $\mu$m or less, 30 $\mu$m or less, 20 $\mu$m or less, or 1 $\mu$m or more and 500 $\mu$m or less, 1 $\mu$m or more and 100 $\mu$m or less, 1 $\mu$m or more and 80 $\mu$m or less, 1 $\mu$m or more and 75 $\mu$m or less, 1 $\mu$m or more and 50 $\mu$m or less, 1 $\mu$m or more and 30 $\mu$m or less, 1 $\mu$m or more and 20 $\mu$m or less, 5 $\mu$m or more and 500 $\mu$m or less, 5 $\mu$m or more and 100 $\mu$m or less, 5 $\mu$m or more and 80 $\mu$m or less, 5 $\mu$m or more and 75 $\mu$m or less, 5 $\mu$m or more and 50 $\mu$m or less, 5 $\mu$m or more and 30 $\mu$m or less, 5 $\mu$m or more and 20 $\mu$m or less, 10 $\mu$m or

more and 500 μm or less, 10 μm or more and 100 μm or less, 10 μm or more and 80 μm or less, 10 μm or more and 75 μm or less, 10 μm or more and 50 μm or less, 10 μm or more and 30 μm or less, 10 μm or more and 20 μm or less, 15 μm or more and 500 μm or less, 15 μm or more and 100 μm or less, 15 μm or more and 80 μm or less, 15 μm or more and 75 μm or less, 15 μm or more and 50 μm or less, 15 μm or more and 30 μm or less, or 15 μm or more and 20 μm or less.

When the thickness of the second coating region measured from the interface with the insulating layer is less than 1 μm, the insulating properties may decrease and the risk of short circuit may increase. When the thickness of the second coating region exceeds the thickness of the second electrode portion or exceeds 500 μm, the surface in contact with other cells is not maintained uniformly during the production of stack cells, which may cause a technical problem that the charge/discharge characteristics of the battery are deteriorated.

Further, in one embodiment of the invention, the length of the second coating region measured from a tangent of the first coating region and the second coating region may be 50 μm or more and 2 mm or less.

Specifically, the length of the second coating region measured from a tangent of the first coating region and the second coating region may be 50 μm or more, 100 μm or more, 200 μm or more, 300 μm or more, 2 mm or less, 1.5 mm or less, 1mm or less, 900 μm or less, 800 μm or less, 750 μm or less, 500 μm or less, 400 μm or less, or may be 50 μm or more and 2 mm or less, 100 μm or more and 2 mm or less, 200 μm or more and 2 mm or less, 300 μm or more and 2 mm or less, 50 μm or more and 1.5 mm or less, 100 μm or more and 1.5 mm or less, 200 μm or more and 1.5 mm or less, 300 μm or more and 1.5 mm or less, 50 μm or more and 1mm or less, 100 μm or more and 1mm or less, 200 μm or more and 1mm or less, 300 μm or more and 1mm or less, 50 μm or more and 900 μm or less, 100 μm or more and 900 μm or less, 200 μm or more and 900 μm or less, 300 μm or more and 900 μm or less, 50 μm or more and 800 μm or less, 100 μm or more and 800 μm or less, 200 μm or more and 800 μm or less, 300 μm or more and 800 μm or less, 50 μm or more and 750 μm or less, 100 μm or more and 750 μm or less, 200 μm or more and 750 μm or less, 300 μm or more and 750 μm or less, 50 μm or more and 500 μm or less, 100 μm or more and 500 μm or less, 200 μm or more and 500 μm or less, 300 μm or more and 500 μm or less, 50 μm or more and 400 μm or less, 100 μm or more and 400 μm or less, 200 μm or more and 400 μm or less, or 300 μm or more and 400 μm or less.

The length of the second coating region measured from the tangent of the first coating area and the second coating area may mean the length of the second coating region measured in the extension direction of the electrode portion from the tangent of the first coating region and the second coating region.

The tangent of the first coating region and the second coating region means a boundary line where the first coating region and the second coating region come into contact, means a line connecting the points of the outermost portion where the first coating region and the second coating region come into contact on the basis of the cross section, and means a portion indicated by 40 in FIG. 1. Specifically, the length of the second coating region measured from the tangent of the first coating region and the second coating region in the lithium secondary battery electrode means the length of 20 in FIG. 1.

The extension direction may refer to a direction in which a tab extends in the electrode portion.

When the length of the second coating region measured from the tangent of the first coating region and the second coating region is less than 50 μm, the insulation properties may decrease and the risk of short circuits may increase. If the thickness is more than 2 mm, the area of the electrode portion may decrease, resulting in a decrease in cell capacity.

Further, the ratio of the thickness of the second coating region measured from the interface with the insulating layer to the length of the second coating region measured from the tangent of the first coating region and the second coating region may be 0.001 or more and 1.0 or less.

Specifically, the ratio of the thickness of the second coating region measured from the interface with the insulating layer to the length of the second coating region measured from the tangent of the first coating region and the second coating region may be 0.001 or more, 0.01 or more, 0.025 or more, 0.03 or more, 0.05 or more, and may be 1.0 or less, 0.99 or less, 0.9 or less, 0.8 or less, 0.5 or less, 0.2 or less, or 0.1 or less, and may be 0.001 or more and 1.0 or less, 0.001 or more and 0.99 or less, 0.001 or more and 0.9 or less, 0.001 or more and 0.8 or less, 0.001 or more and 0.5 or less, 0.001 or more and 0.2 or less, 0.001 or more and 0.1 or less, 0.01 or more and 1.0 or less, 0.01 or more and 0.99 or less, 0.01 or more and 0.9 or less, 0.01 or more and 0.8 or less, 0.01 or more and 0.5 or less, 0.01 or more and 0.2 or less, 0.01 or more and 0.1 or less, 0.025 or more and 1.0 or less, 0.025 or more and 0.99 or less, 0.025 or more and 0.9 or less, 0.025 or more and 0.8 or less, 0.025 or more and 0.5 or less, 0.025 or more and 0.2 or less, 0.025 or more and 0.1 or less, 0.03 or more and 1.0 or less, 0.03 or more and 0.99 or less, 0.03 or more and 0.9 or less, 0.03 or more and 0.8 or less, 0.03 or more and 0.5 or less, 0.03 or more and 0.2 or less, 0.03 or more and 0.1 or less, 0.05 or more and 1.0 or less, 0.05 or more and 0.99 or less, 0.05 or more and 0.9 or less, 0.05 or more and 0.8 or less, 0.05 or more and 0.5 or less, 0.05 or more and 0.2 or less, or 0.05 or more and 0.1 or less.

When the ratio of the thickness of the second coating region measured from the interface with the insulating layer to the length of the second coating region measured from the tangent of the first coating region and the second coating region is less than 0.001, the area of the electrode portion decreases, cell capacity may decrease or insulation characteristics may decrease, thereby increasing the risk of short circuit.

Further, when the ratio of the thickness of the second coating region measured from the interface with the insulating layer to the length of the second coating region measured from the tangent of the first coating region and the second coating region is more than 1.0, the insulating properties may decrease and the risk of short circuits may increase.

In the electrode for a lithium secondary battery, the coating member may have a porosity of 10% or more and 50% or less.

Specifically, in the electrode for a lithium secondary battery, the coating member may have a porosity of 10% or more, 15% or more, or 50% or less, or 40% or less, 25% or less, and may be 10% or more and 50% or less, 10% or more and 40% or less, 10% or more and 25% or less, 15% or more and 50% or less, 15% or more and 40% or less, or 15% or more and 25% or less.

That is, the porosity of each of the first coating region and the second coating region may be 10% or more, 15% or more, or 50% or less, 40% or less, or 25% or less, and may be 10% or more and 50% or less, 10% or more and 40% or less, 10% or more and 25% or less, 15% or more and 50% or less, 15% or more and 40% or less, or 15% or more and 25% or less.

The porosity of the coating member can be realized according to the composition of the coating layer, which will be described later. As the porosity of the coating member is 10% or more and 50% or less, the insulating physical properties and mechanical properties are stably maintained, and a technical effect capable of preventing the risk of short circuit due to electrode distortion can be realized.

If the porosity of the coating member is more than 50%, it is weak in mechanical properties become weak and is easily damaged when external pressure is applied, which may lead to technical problems that short circuits occur in the battery.

The porosity can be obtained according to the following Equation by measuring the coating volume and mass to determine the actually measured density, and then calculating the theoretical density of the solid content of the coating composition.

$$\text{Porosity }(\%) = (1 - \text{Actually measured density/Theoretical density}) * 100.$$

Meanwhile, in the electrode for a lithium secondary battery of the embodiment, each of the first coating region and the second coating region may include inorganic fine particles and a binder resin.

By adjusting the size of the inorganic fine particles, the content of the inorganic fine particles, and the content of the binder resin, the first coating region and the second coating region can form micro- or nano-sized pores, and can further adjust the pore size and porosity. That is, as each of the first coating region and the second coating region contains the binder resin and the inorganic fine particles, the porosity of the coating member, the first coating region and the second coating region can satisfy 10% or more and 50% or less.

In addition, as mentioned above, when the coating member has a shape that surrounds a side surface of the electrode portion including one surface of the current collector, the electrode layer, and each of the first coating region and the second coating region contains the binder resin and the inorganic fine particles, the problem of cell short circuit can be prevented even if there is a slight distortion during cell assembly, and at the same time, the coating layer is formed uniformly, thereby realizing excellent mechanical physical properties.

The inorganic fine particles are a main component forming the first coating region and the second coating region, and empty spaces exist between the inorganic fine particles, which not only serve to form fine pores, but also serve as a kind of spacer capable of maintaining the physical shape of the coating layer.

The inorganic fine particles may include inorganic fine particles having a particle size of 10 nm or more and 1 $\mu$m or less. The particle size of the inorganic fine particles can be confirmed through a scanning electron microscope image (SEM) or a transmission electron microscope image (TEM) taken from the cross section of the first coating region and the second coating region.

Specifically, the inorganic fine particles may include inorganic fine particles having a particle size of 10 nm or more, 100 nm or more, 1 $\mu$m or less, 900 nm or less, 800 nm or less, 700 nm or less, 500 nm or less, and may be 10 nm or more and 1 $\mu$m or less, 100 nm or more and 1 $\mu$m or less, 100 nm or more and 900 nm or less, 100 nm or more and 800 nm or less, 100 nm or more and 700 nm or less, or 100 nm or more and 500 nm or less.

When the particle size of the inorganic fine particles is less than 10 nm, the dispersibility is lowered and it is not easy to adjust the physical properties of the coating layer. When the particle size exceeds 1 ,um, the thickness of the first coating region and the second coating region increases, the mechanical physical properties may deteriorate, and due to excessively large pore size, the insulating properties may decrease and thus, the probability of an internal short circuit occurring during charge and discharge of the battery becomes high.

In addition, the inorganic fine particles may have a D50 of 10 nm or more and 1 $\mu$m or less. The D50 may refer to the value of the particle diameter at 50% in the cumulative distribution of partis size diameters, in order from the smallest one on the basis of mass, among particle diameters measured by a laser diffraction scattering particle size distribution measuring apparatus.

Specifically, the inorganic fine particles have a D50 of 10 nm or more, 1 μm or less, 900 nm or less, 800 nm or less, 700 nm or less, 500 nm or less, and may be 10 nm or more and 1 μm or less, 100 nm or more and 1 μm or less, 100 nm or more and 900 nm or less, 100 nm or more and 800 nm or less, 100 nm or more and 700 nm or less, or 100 nm or more and 500 nm or less.

When the D50 of the inorganic fine particles is less than 10 nm, the dispersibility is lowered and it is not easy to adjust the physical properties of the first coating region and the second coating region. When the D50 is more than 1 ,um, the thickness control of the first coating region and the second coating region is not uniform, and due to an excessively large pore size, the probability of an internal short circuit occurring during charging and discharging of the battery becomes high.

In one embodiment of the invention, the inorganic fine particles are not particularly limited as long as they are electrochemically stable. Specifically, the inorganic fine particles are not particularly limited as long as they do not undergo an oxidation and/or reduction reaction within the operating voltage range of the applied battery. In particular, when inorganic fine particles having ion transfer ability are used, the ion conductivity in the lithium secondary battery can be increased and the performance can be improved. In addition, when using inorganic particles having a high dielectric constant as the inorganic fine particles, it contributes to increasing the degree of dissociation of an electrolyte salt, such as a lithium salt, in the liquid electrolyte, which can improve the ionic conductivity of the electrolyte.

For example, the inorganic fine particles may include one or more types of inorganic fine particles selected from the group consisting of alumina($Al_2O_3$), boehmite(AlOOH), aluminum hydroxide($Al(OH)_3$), silica($SiO_2$), titania($TiO_2$), zirconia($ZrO_2$), zirconium titanate($ZrTiO_4$), $La_2O_3$, $Y_2O_3$, $SrTiO_3$, $BaTiO_3$, magnesia(MgO), magnesium hydroxide($Mg(OH)_2$), aluminosilicate($Al_2O_5Si$), zeolite, LLZO($Li_7La_3Zr_2O_{12}$), LATP($Li_{1+x}Al_xTi_{2-x}(PO_4)_3$ $0<x<2$), and PZT($Pb[Zr_xTi_{1-x}]O_3$, $0 \leq x \leq 1$).

Further, each of the first coating region and the second coating region may contain 1 parts by weight or more and 100 parts by weight or less of the inorganic fine particles with respect to 100 parts by weight of the binder resin.

Specifically, each of the first coating region and the second coating region may contain the inorganic fine particles in an amount of 1 parts by weight or more and 100 parts by weight or less, 10 parts by weight or more and 100 parts by weight or less, 20 parts by weight or more and 100 parts by weight or less, 25 parts by weight or more and 100 parts by weight or less, 30 parts by weight or more and 100 parts by weight or less, 50 parts by weight or more and 100 parts by weight or less, or 80 parts by weight or more and 100 parts by weight or less with respect to 100 parts by weight of the binder resin.

By adjusting the size of the inorganic fine particles, the content of the inorganic fine particles and the content of the binder resin, the first coating region and the second coating region can each form pores in tens to hundreds of nanometer units, and can also adjust the pore size and porosity. That is, as each of the first coating region and the second coating region includes 1 part by weight or more and 100 parts by weight or less of the inorganic fine particles with respect to 100 parts by weight of the binder resin, the porosity of the first coating region and the second coating region may satisfy 10% or more and 70% or less.

When the first coating region and the second coating region contain less than 1 parts by weight of the inorganic fine particles with respect to 100 parts by weight of the binder resin, the content of the binder resin is excessively increased, and the heat resistance of the coating may be deteriorated, which may deteriorate the stability of the final battery. In addition, when the first coating region and the second coating region contain more than 100 parts by weight of the inorganic fine particles with respect to 100 parts by weight of the binder resin, the content of the binder resin is excessively reduced, the adhesive force between the inorganic fine particles becomes weak, and thus, the peeling resistance becomes weak, which may deteriorate the mechanical physical properties of the coating layer.

In one embodiment of the invention, the binder resin is located on all or part of the inorganic fine particles, and functions to connect and fix the inorganic fine particles.

Meanwhile, the binder resin may be at least one binder resin selected from the group consisting of polyvinylidene fluoride, polyvinylidene fluoride-hexafluoro propylene, polyvinylidene fluoride-trichloroethylene, polyvinylidene fluoride-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, and styrene butadiene rubber.

In the electrode for a lithium secondary battery, the insulating layer may have a porosity of 30% or more, 30% or more and 90% or less, 40% or more and 90% or less, 40% or more and 80% or less, or 40% or more and 70% or less.

The porosity of the insulating layer may be realized according to the composition of the insulating layer, which will be described later. As the porosity of the insulating layer is 40% or more and 90% or less, it is possible to facilitate the movement of lithium ions in the electrolyte while preventing direct contact between the cathode and the anode, thereby realizing a technical effect capable of realizing the charge/discharge performance of the secondary battery.

When the porosity of the insulating layer is less than 30%, resistance to electrolyte increases and ionic conductivity decreases, which may cause a technical problem that battery charge/discharge performance deteriorates. When the porosity of the insulating layer exceeds 90%, the possibility of internal short-circuiting may increase, which may cause battery charge/discharge failure and technical problems about safety.

The porosity may be measured in the same manner as in the method of obtaining the porosity of the first coating layer and the second coating layer with respect to the electrode sample coated with the insulating layer.

Meanwhile, the insulating layer may include a binder resin and inorganic fine particles.

The details of the binder resin and the inorganic fine particles include all of the contents described above.

By adjusting the size of the inorganic fine particles, the content of the inorganic fine particles and the content of the binder resin, the insulating layer can form pores in tens to hundreds of nanometer units, and can also adjust the pore size and porosity. That is, as the insulating layer includes the binder resin and the inorganic fine particles, the porosity of the coating layer can satisfy 10% or more and 70% or less.

In the above embodiment, the thickness of the insulating layer is not particularly limited, and for example, it may be adjusted to 0.01 to 100 $\mu$m in consideration of battery performance.

For example, the insulating layer may have a thickness of 10 $\mu$m or more and 30 $\mu$m or less.

When the thickness of the insulating layer is less than 0.1 $\mu$m, it does not play a role of protecting the electrode and the insulation properties are deteriorated. When the thickness exceeds 30 $\mu$m, the ionic conductivity decreases and the overall volume increases, which may decrease output characteristics, energy density, and the like.

Meanwhile, according to another embodiment of the present invention, a lithium secondary battery comprising the electrode for a lithium secondary battery; and a second electrode portion formed on the electrode for a lithium secondary battery can be provided.

The details of the electrode for a lithium secondary battery includes all of the contents described above.

Specifically, the lithium secondary battery according to the above embodiment may include an electrode assembly wound with a separator interposed between a cathode and an anode, and a case that incorporates the electrode assembly. In addition, the cathode, the anode, and the separator can be impregnated with an electrolyte.

As mentioned above, instead of a porous polymer separator including a porous substrate and a coating layer formed on the porous substrate, the lithium secondary battery of the embodiment comprises the insulating layer included in the electrode for a lithium secondary battery of the above embodiment, the adhesive force is maintained even if the electrode expands and contracts, thereby realizing excellent battery life characteristics.

The electrode for a lithium secondary battery may be an anode for a lithium secondary battery or a cathode for a lithium secondary battery. When the electrode for a lithium secondary battery is an anode for a lithium secondary battery, the second electrode portion may be a cathode, and when the electrode for a lithium secondary battery is a cathode for a lithium secondary battery, the second electrode portion may be an anode.

As mentioned above, the electrode portion may include a current collector; an electrode layer formed on the current collector; and an insulating layer formed on the electrode layer.

Further, the second electrode portion may include a second electrode layer; and a second current collector formed on the second electrode layer.

That is, the lithium secondary battery of the embodiment may have a structure in which the first electrode portion including a current collector, an electrode layer formed on the current collector, and an insulating layer formed on the electrode layer; and the second electrode portion including a second electrode layer, and a second current collector formed on the second electrode layer, are sequentially stacked.

The electrode portion may include a tab extending from the current collector, and the second electrode portion may include a tab extending from the second current collector.

In the lithium secondary battery of the above embodiment, the electrode portion may have an exposed portion that is larger in size on all four sides compared to the second electrode portion. That is, the lithium secondary battery of the embodiment may include an exposed portion without facing the electrode portion and the second electrode portion, and the above-mentioned coating layer can be formed on exposed portions of the electrode portion and the second electrode portion without facing each other.

Specifically, in the lithium secondary battery of the embodiment, the lengths in the extension direction of the electrode portion and the second electrode portion may be different may be different. More specifically, in the lithium secondary battery of the embodiment, the length in the extension direction of the electrode portion may be 0.2 mm or more and 5 mm or less longer than the length in the extension direction of the second electrode portion.

Specifically, in the lithium secondary battery of the embodiment, the length in the extension direction of the electrode portion may be 0.2 mm or more, 0.5 mm or more, 5 mm or less, 2 mm or less, 0.2 mm or more and 5 mm or less, 0.5 mm or more and 5 mm or less, 0.2 mm or more and 2 mm or less, or 0.5 mm or more and 2 mm or less longer than the length in the extension direction of the second electrode portion.

In the electrode for a lithium secondary battery, a difference between a length in an extension direction of the electrode portion and a length in an extension direction of the second electrode portion may be twice the length corresponding to 30 in FIG. 1.

The length in the extension direction means a length in a direction in which a tab extends in the electrode portion and the second electrode portion.

In the lithium secondary battery of the embodiment, when the length in the extension direction of the electrode portion is less than 0.2 mm longer than the length in the extension direction of the second electrode portion, it is difficult to realize unless it is manufactured to overlap completely. When the length in the extension direction of the electrode portion is longer than the length in the extension direction of the second electrode portion by more than 5 mm, it may not be suitable due to the increase in material costs.

The electrode for a lithium secondary battery may be an anode for a lithium secondary battery or a cathode for a lithium secondary battery. When the electrode for a lithium secondary battery is an anode for a lithium secondary battery, the second electrode portion may be a cathode, and when the electrode for a lithium secondary battery is a cathode for a lithium secondary battery, the second electrode portion may be an anode.

Specifically, the anode for the lithium secondary battery an anode material including an anode active material, a conductive material, and a binder; and a current collector supporting the anode material.

The anode material may correspond to an electrode layer in the electrode for a lithium secondary battery of the embodiment.

The anode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, $SiO_x$ ($0<x<2$), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, $SnO_2$, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with $SiO_2$ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

The anode current collector can be generally fabricated to have a thickness of 3 to 500 $\mu$m. Such an anode current collector is not particularly limited as long as it has high conductivity without causing chemical changes to the corresponding battery. For example, copper, stainless steel, aluminum, nickel, titanium, calcined carbon, copper or stainless steel having a surface treated with carbon, nickel, titanium, silver, etc., aluminum-cadmium alloy, and the like may be used. In addition, similarly to the cathode current collector, the anode current collector may be processed to form fine irregularities on the surface thereof so as to enhance adhesion to the anode active material, and the current collector can be used in various forms such as a film, a sheet, a foil, a net, a porous body, a foaming body, and a nonwoven fabric structure.

Preferably, the anode may include an anode active material including at least one selected from the group consisting of a carbonaceous material and a silicon compound.

Here, the carbonaceous material is a material containing at least one selected from the group consisting of natural graphite, artificial graphite, Kish graphite, pyrolytic carbon, mesophase pitches, mesophase pitch based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein $0<x<2$), the Si-Q alloy, mixtures thereof, or a mixture of at least one thereof and $SiO_2$.

Further, the anode may include micro silicon. When the anode includes micro silicon, it is possible to realize a superior capacity compared to the case where a carbonaceous material is used as an anode active material. Specifically, when a specific micro silicon is used as the silicon compound, it is possible to maintain a remaining capacity of 80% or more even after charging and discharging 500 times or more, and realize significantly superior energy density to conventional lithium secondary batteries. Further, when the anode includes micro silicon, the charge/discharge life of a solid battery using a solid electrolyte can be greatly increased, and the charging speed at room temperature can also be greatly improved.

Although the size of the micro silicon is not particularly limited, but for example, the micro silicon may have a diameter of 100 μm or less, or a diameter of 1 to 100 μm, or a diameter of 1 to 20 ,um.

According to one embodiment of the invention, the anode active material may be contained in an amount of 85% to 98% by weight relative to the total weight of the anode material.

Specifically, the content of the anode active material may be 85% by weight or more, or 87% by weight or more, or 90% by weight or more; and 98% by weight or less, or 97% by weight or less, or 95% by weight or less relative to the total weight of the anode material.

Preferably, the content of the anode active material may be 85% by weight to 97% by weight, or 87% by weight to 97% by weight, or 87% by weight to 95% by weight, or 90% by weight to 95% by weight relative to the total weight of the anode material.

The conductive material is used to impart conductivity to the electrode.

The conductive material can be used without particular limitation as long as it has electronic conductivity without causing chemical changes in the battery. As a non-limiting example, the conductive material may include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 0.5% to 10% by weight, or 1% to 10% by weight, or 1% to 5% by weight with respect to the total weight of the anode material.

The binder is used to properly attach the anode material to the current collector.

As a non-limiting example, the binder may include polyvinylidenefluoride (PVdF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluorine rubber, and the like. As the binder, any one alone or a mixture of two or more of the above-mentioned examples may be used.

The content of the binder may be adjusted within a range that does not cause a decrease in battery capacity while exhibiting an appropriate level of adhesiveness. Preferably, the content of the binder may be 0.5% to 10% by weight, 1% to 10% by weight, or 1% to 5% by weight with respect to the total weight of the anode material.

As the current collector, materials known in the technical field to which the present disclosure belongs to be applicable to an anode of a lithium secondary battery can be used without particular limitation.

As a non-limiting example, the current collector may include stainless steel; aluminum; nickel; titanium; calcined carbon; aluminum or stainless steel having a surface treated with carbon, nickel, titanium, silver, etc., and the like.

Preferably, the current collector may have a thickness of 3 μm to 500 μm. The current collector may have fine irregularities formed on the surface thereof to enhance the bonding strength of the anode material. The current collector may have various forms such as a film, a sheet, a foil, a net, a porous body, a foaming body, and a non-woven fabric structure.

The separator separates the cathode and the anode, and provides a passage for lithium ions to move. In one embodiment of the invention, the insulating layer may function as a separator. In one embodiment of the invention, as the insulating layer is formed directly on the electrode substrate, the lithium secondary battery of one embodiment may include a separator that does not include a porous polymer substrate.

The lithium secondary battery of the above embodiment may optionally include a porous polymer substrate. The type of the porous polymer substrate is not particularly limited, but for example, at least one polymer selected from the group consisting of polyethylene, polypropylene, polyethyleneterephthalate, polybutyleneterephthalate, polyester, polyacetal, polyamide, polycarbonate, polyimide, polyetheretherketone, polyaryletherketone, polyetherimide, polyamideimide, polybenzimidazole, polyethersulfone, polyphenyleneoxide, cyclic olefin copolymer, polyphenylenesulfide and polyethylenenaphthalene, or a polymer substrate formed of a mixture of two or more thereof, or multilayers, woven fabrics, non-woven fabrics, etc. thereof may be used.

In the porous polymer substrate, the type and thickness of the substrate, the size and number of pores, and the thickness of ultra-fine yarn, especially in the case of nonwoven fabric, etc. can be adjusted in consideration of the melting temperature, manufacturing convenience, porosity, ion migration, insulation, etc.

In one embodiment of the invention, the thickness of the porous polymer substrate is not particularly limited, and can be adjusted to, for example, 0.01 to 100 μm in consideration of battery performance.

And, the cathode for a lithium secondary battery may comprise a cathode material including a cathode active material, a binder, a conductive material, and a cathode additive; and a current collector supporting the cathode material.

The cathode material may correspond to an electrode layer in the electrode for a lithium secondary battery of the embodiment.

The cathode additive for a lithium secondary battery has a property of irreversibly releasing lithium during charging and discharging of the lithium secondary battery. Therefore, the cathode additive for a lithium secondary battery may be included in a cathode for a lithium secondary battery and serve as a sacrificial cathode material for prelithiation.

Specifically, the cathode can be manufactured by coating a cathode mixture onto a cathode current collector and then drying it, and if necessary, a filler can be further added to the mixture.

Preferably, the cathode for a lithium secondary battery comprises a cathode material including a cathode active material, a conductive material, the sacrificial cathode material, and a binder; and, a current collector supporting the cathode material.

As it goes toward higher capacity batteries, the ratio of the anode active material in the anode must be higher in order to increase the capacity of the battery, which also increases the amount of lithium consumed in the SEI layer. Therefore, the design capacity of the battery can be determined by calculating the amount of lithium consumed in the SEI layer of the anode and then back-calculating the amount of the sacrificial cathode material to be applied to the cathode.

According to one embodiment of the invention, the sacrificial cathode material may be contained in an amount of more than 0% by weight and less than 15% by weight relative to the total weight of the cathode material.

In order to compensate for the irreversible lithium consumed in the formation of the SEI layer, the content of the sacrificial cathode material is preferably more than 0% by weight relative to the total weight of the cathode material.

However, when the sacrificial cathode material is excessively contained, the content of the cathode active material showing reversible charge/discharge capacity decreases, and the capacity of the battery decreases, and the residual lithium in the battery is plated on the anode, causing a short circuit of the battery or impairing safety. Therefore, the content of the sacrificial cathode material is preferably 15% by weight or less relative to the total weight of the cathode material.

Specifically, the content of the sacrificial cathode material may be more than 0% by weight, or more than 0.5% by weight, or 1% by weight or more, or 2% by weight or more, or 3% by weight or more; and 15% by weight or less, or 12% by weight or less, or 10% by weight or less relative to the total weight of the cathode material.

Preferably, the content of the sacrificial cathode material may be 0.5% by weight to 15% by weight, or 1% by weight to 15% by weight, or 1% by weight to 12% by weight, or 2% by weight to 12% by weight, or 2% by weight to 10% by weight, or 3% by weight to 10% by weight relative to the total weight of the cathode material.

As the cathode active material, compounds known to be applicable to lithium secondary batteries in the technical field to which the disclosure pertains can be used without particular limitation.

As a non-limiting example, the cathode active material may include NCM($Li[Ni,Co,Mn]O_2$), NCMA($Li[Ni,Co,Mn,Al]O_2$), $LiCoO_2$, $LiNiO_2$, $LiMnO_2$, $LiMn_2O_2$, $LiNi_{1-d}Co_dO_2$, $LiCo_{1-d}Mn_dO_2$, $LiNi_{1-d}Mn_dO_2$ (wherein $0 \leq d < 1$), $Li(Ni_aCo_bMn_c)O_4$ ($0<a<2$, $0<b<2$, $0<c<2$, $a+b+c=2$), $LiMn_{2-e}Ni_eO_4$, $LiMn_{2-e}Co_eO_4$ (wherein $0 < e < 2$), $LiCoPO_4$, $LiFePO_4$, and the like. As the cathode active material, one or a mixture of two or more of the above-mentioned examples may be used.

According to one embodiment of the invention, the cathode active material may be contained in an amount of 80% to 98% by weight relative to the total weight of the cathode material.

Specifically, the content of the cathode active material may be 80% by weight or more, or 82% by weight or more, or 85% by weight or more; and 98% by weight or less, or 95% by weight or less, or 93% by weight or less, or 90% by weight or less relative to the total weight of the cathode material.

Preferably, the content of the cathode active material may be 82% by weight to 98% by weight, or 82% by weight to 95% by weight, or 82% by weight to 93% by weight, or 85% by weight to 93% by weight, or 85% by weight to 90% by weight relative to the total weight of the cathode material.

The cathode for a lithium secondary battery can be formed by stacking a cathode material including the cathode active material, the conductive material, the sacrificial cathode material, and a binder on the current collector.

The filler is selectively used as a component that suppresses expansion of the cathode, and is not particularly limited as long as it is a fibrous material without causing chemical change in the battery. For example, olefinic polymers such as polyethylene and polypropylene; and fibrous materials such as glass fibers and carbon fibers are used.

The details of the conductive material, the binder, and the current collector included in the cathode material include all of the contents described above.

Meanwhile, the electrolyte can be used without particular limitation as long as it is known to be applicable to a lithium secondary battery in the technical field to which the disclosure pertains. For example, the electrolyte may include an organic liquid electrolyte, an inorganic liquid electrolyte, a solid polymer electrolyte, a gel polymer electrolyte, a solid inorganic electrolyte, a molten inorganic electrolyte, an aqueous electrolyte, or the like.

The aqueous electrolyte is the one obtained by dissolving a salt in an aqueous solvent such as water or alcohol, and a lithium secondary battery using such an aqueous electrolyte offers advantages in terms of high ionic conductivity and safety of the aqueous electrolyte, and inexpensive in process and manufacturing cost. In addition, a battery using an aqueous electrolyte rather than a non-aqueous organic electrolyte has an advantage in terms of environment.

Specifically, the aqueous electrolyte may include an aqueous solvent and a lithium salt.

The aqueous solvent is a solvent containing water, and is not particularly limited, but may contain 1% by weight or more of water relative to the total weight of the aqueous solvent that constitutes the electrolyte. As the aqueous solvent, water may be used alone, or a solvent miscible with water may be used in combination.

The water-miscible solvent may be a polar solvent, and can include, for example, at least one selected from the group consisting of a C1-C5 alcohol and a C1-C10 glycol ether.

For example, the C1 to C5 alcohol may be at least one selected from the group consisting of methanol, ethanol, n-propanol, isopropanol, ethylene glycol, 1,2-propanediol, 1,3-propanediol, 1,2-butanediol, 1,3-butanediol, 1,4-butanediol, glycerol and 1,2,4-butanetriol, but is not limited thereto.

Further, the C1-C10 glycol ether may be at least one selected from the group consisting of ethylene glycol monomethyl ether(MG), diethylene glycol monomethyl ether(MDG), triethylene glycol monomethyl ether(MTG), polyethylene glycol monomethyl ether(MPG), ethylene glycol monoethyl ether(EG), diethylene glycol monoethyl ether(EDG), ethylene glycol monobutyl ether(BG), diethylene glycol monobutyl ether(BDG), triethylene glycol monobutyl ether(BTG), propylene glycol monomethyl ether(MFG), and dipropylene glycol monomethyl ether(MFDG).

The lithium salt contained in the electrolyte dissolves in the aqueous solvent and acts as a source of lithium ions in the battery, which enables basic operation of the lithium secondary battery and facilitates the movement of lithium ions between the cathode and the anode.

Specifically, the lithium salt includes $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), LiCl, LiI, $LiB(C_2O4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Alternatively, the electrolyte can comprise a non-aqueous organic solvent and a lithium salt.

The non-aqueous organic solvent can be used without any particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial cathode material, the non-aqueous organic solvent may be preferably a mixture of a cyclic carbonate having high ion conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium secondary battery and facilitates movement of lithium ions between the cathode and the anode.

Specifically, the lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), LiCl, LiI, $LiB(C_2O_2)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% to 5% by weight with respect to the total weight of the electrolyte.

The lithium secondary battery of one embodiment may be a lithium ion battery, a lithium ion polymer battery, or a lithium polymer battery, depending on the type of electrolyte and/or the type of separator.

The liquid electrolyte may be a lithium salt-containing non-aqueous electrolyte. The lithium salt-containing non-aqueous electrolyte is composed of a non-aqueous electrolyte and lithium, and the non-aqueous electrolyte includes a non-aqueous organic solvent, an organic solid electrolyte, an inorganic solid electrolyte, and the like, but are not limited thereto.

Examples of the organic solid electrolyte include polyethylene derivatives, polyethylene oxide derivatives, polypropylene oxide derivatives, phosphoric acid ester polymers, polyagitation lysine, polyester sulfide, polyvinyl alcohols, polyvinylidene fluoride, and polymers containing ionic dissociation groups.

As the inorganic solid electrolyte, nitrides, halides and sulfates of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$ may be used.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further contain halogen-containing solvents such as carbon tetrachloride and ethylene trifluoride. Further, in order to improve high-temperature storage characteristics, the non-aqueous electrolyte may further contain carbon dioxide gas or the like and may further contain fluoro-ethylene carbonate (FEC), propene sulfone (PRS) and the like.

In one specific example, the lithium salt-containing non-aqueous electrolyte can be prepared by adding a lithium salt such as $LiPF_6$, $LiClO_4$, $LiBF_4$ and $LiN(SO_2CF_3)_2$, to a mixed solvent of a cyclic carbonate such as EC or PC as a highly dielectric solvent and a linear carbonate such as DEC, DMC or EMC as a low-viscosity solvent.

The lithium secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The lithium secondary battery may have various shapes such as a prismatic shape, a cylindrical shape, and a pouch shape.

The lithium secondary battery of another embodiment described above can be realized as a battery module including this as a unit cell, a battery pack including the battery module, and a device including the battery pack as a power source.

At this time, specific examples of the device may be an electric vehicle, a hybrid electric vehicle, a plug-in hybrid electric vehicle, and a system for power storage, but is not limited thereto.

**[Advantageous Effects]**

According to the present disclosure, an electrode for a lithium secondary battery that can ensure the insulation properties of the electrode edge and thus prevent defects due to short circuits during cell assembly, and a lithium secondary battery including the same can be provided.

**[BRIEF DESCRIPTION OF THE DRAWINGS]**

FIG. 1 is a cross-sectional view of a lithium secondary battery according to one embodiment of the present invention.

FIG. 2 is an exploded perspective view of an electrode portion and a second electrode portion of a lithium secondary battery according to one embodiment of the present invention.

FIG. 3 is a cross-sectional view of a lithium secondary battery in which a direction of a first coating region in contact with a side surface of an electrode portion and a direction of a second coating region in contact with a part of an insulating layer form an angle of 60° in the lithium secondary battery according to one embodiment of the present invention.

FIG. 4 is a cross-sectional view of a lithium secondary battery in which a direction of a first coating region in contact with a side surface of an electrode portion and a direction of a second coating region in contact with a part of an insulating layer form an angle of 90° in the lithium secondary battery according to one embodiment of the present invention.

FIG. 5 is a cross-sectional view of a lithium secondary battery in which a direction of a first coating region in contact with a side surface of an electrode portion t and a direction of a second coating region in contact with a part of an insulating layer form an angle of 120° in the lithium secondary battery according to one embodiment of the present invention.

## [DETAILED DESCRIPTION OF THE EMBODIMENTS]

Hereinafter, actions and effects of the present invention will be described in more detail with reference to specific examples of the present invention. However, these are for illustrative purposes only, and the scope of the present invention is not intended to be limited thereby.

**Example 1**

(1) Manufacture of cathode

Carbon powder as a cathode active material, carboxymethylcellulose (CMC) as a binder, and carbon black as conductive material were added to ion-exchanged water in amount of 96 wt.%, 3 wt.% and 1 wt.%, respectively, to prepare a cathode slurry. The cathode slurry was applied to a copper (Cu) thin film as a cathode current collector having a thickness of 10 $\mu$m using a comma coater, dried, and subjected to a roll press to manufacture a cathode.
The loading amount of the cathode was adjusted so that the final manufactured capacity (based on half-cell) was 5.3 mAh/cm$^2$.

(2) Manufacture of anode

92 wt.% of lithium cobalt composite oxide as an anode active material, 4 wt.% of carbon black as a conductive material, and 4 wt.% of PVDF as a binder were added to N-methyl-2 pyrrolidone (NMP) as a solvent to prepare an anode slurry. The anode slurry was applied to an aluminum (Al) thin film as anode current collector having a thickness of 10 $\mu$m, and dried to manufacture anode, and then subjected to a roll press to manufacture an anode. The loading amount of the anode was controlled so that the capacity (based on half-cell) of the final manufactured anode was 4.8 mAh/cm$^2$.

(3) Formation of insulating layer

10 g of polyvinylidene fluoride-chlorotrifluoroethylene copolymer (PVdF-CTFE) was added to 10 g of N-methyl-2 pyrrolidone (NMP), and dissolved at 50°C for about 12 hours or more to prepare a binder polymer solution. 10 g of alumina powder was added to the prepared polymer solution, and alumina powder was crushed and dispersed into 400 nm using a ball mill for 12 hours or more to prepare a composition for forming an insulating layer.

(4) Preparation of a composition for forming a coating layer

10 g of polyvinylidene fluoride (PVdF) was added to 10 g of N-methyl-2 pyrrolidone (NMP), and dissolved at 50°C for about 12 hours or more to prepare a binder polymer solution. 10 g of Boehmite(AlO(OH)) powder was added to the prepared polymer solution, and boehmite powder was crushed and dispersed at 300 nm using a ball mill method for more than 12 hours to prepare a composition for forming a coating layer.

(5) Manufacture of batteries

The composition for forming an insulating layer was coated onto the manufactured anode by a doctor blade coating method under a humidity of 30%, and dried at 90°C to form an insulating layer (pore size: 100 nm, porosity: 63%) having a thickness of 20 $\mu$m.
Subsequently, the laminate on which the insulating layer was formed on the anode was punched into a size of 32 mm x 44 mm, and then the composition for forming the coating layer was coated onto the side surface of the laminate and a part of the upper surface of the insulating layer by a dip coating method under a humidity of 30%, and dried at 90°C, so that a coating layer (pore size: 100 nm) was formed on the edge of the laminate including the side surface of the laminate and a part of the upper surface of the insulating layer. The thickness and length of each coating region of the specific coating layer are as shown in Table 1 below.
In addition, the manufactured cathode was punched into a size of 30x42 mm and assembled with the anode on which the coating layer was formed using a lamination method. The electrode leads were welded to the tabs of the assembled cell, placed in an aluminum pouch, and the remaining edges except one edge were sealed. Electrolyte (ethylene carbonate (EC) / ethyl methyl carbonate (EMC) = 3/7 (volume ratio), lithium hexafluorophosphate (LiPF6) 0.7 mol, LiFSI 0.5M, vinylene carbonate 1.5%, 1,3-propane sultone 0.5%, ethylene sulfate 1%, LiBF4 0.2%) was injected in the open edge, vacuum-sealed and then aged at room temperature for 10 hours, so that the inside of the cell was impregnated with the electrolyte. After that, the aluminum pouch mono-cell was attached to a jig, and pressure-bonded at 29 kgf to manufacture a lithium secondary battery.

**Example 2**

A lithium secondary battery was manufactured in the same manner as in Example 1, except that the length of the second coating region measured from the tangent of the first coating region and the second coating region was adjusted to 200 $\mu$m.

**Example 3**

A lithium secondary battery was manufactured in the same manner as in Example 1, except that 13 g of boehmite powder was added in the preparation of a composition for forming a coating layer.

**Example 4**

A lithium secondary battery was manufactured in the same manner as in Example 1, except that the length of the second coating region measured from the tangent of the first coating region and the second coating region was adjusted to 1.5 mm.

**Comparative Example 1**

A lithium secondary battery was manufactured in the same manner as in Example 1, except that a polyolefin separator (thickness: 16 $\mu$m, with double-sided adhesive performance) having a size longer than the length and width of the anode by 2 mm each was interposed between the cathode and the anode manufactured in Example 1, and laminated at 90°C to assembly a cathode/separator/anode.

**Comparative Example 2**

A lithium secondary battery was manufactured in the same manner as in Example 1, except that the anode and the cathode on which the insulating layer was formed were assembled using a lamination method, without forming a coating layer.

**Comparative Example 3**

A lithium secondary battery was manufactured in the same manner as in Example 1, except that polyimide tape was attached instead of the coating layer on the side surface and part of the upper surface of the laminate.

**Comparative Example 4**

A lithium secondary battery was manufactured in the same manner as in Example 1, except that boehmite powder was not added in the preparation of the composition for forming a coating layer.

**Comparative Example 5**

A lithium secondary battery was manufactured in the same manner as in Example 1, except that 3 g of boehmite powder was added in the preparation of the composition for forming a coating layer.

**Experimental Example 1: Analysis of coating layer**

In the lithium secondary battery manufactured in each of Examples and Comparative Examples, the thickness of the first coating region of the coating layer, the thickness of the second coating region, and the length (L1) and the porosity of the second coating region measured from the tangent of the first coating region and the second coating region were analyzed, and shown in Table 1 below.

The porosity of each layer was calculated according to the following Equation by measuring the volume and mass of the applied layer to determine the actually measured density, and then calculating the theoretical density relative to the solid content of the applied composition.

$$\text{Porosity (\%)} = (1 - \text{Actually measured density/Theoretical density}) * 100.$$

**Experimental Example 2: Battery Charge/Discharge Formation Characteristics**

The lithium secondary batteries of Examples, and Comparative Examples were formed between 2.5 to 4.2 V at a 0.1 C-rate at room temperature. The discharge capacity and the coulombic efficiency, which is the ratio of the discharge capacity to the charge capacity, were measured, and the results are shown in Table 1 below.

**Experimental Example 3: High Temperature Safety**

The lithium secondary batteries of Examples, and Comparative Examples were subjected to formation, and then stored in 130°C chamber for 30 minutes with an SOC (State of Charge) of 5%, and cooled back to room temperature. In order to determine whether the battery was short-circuited, the OCV (open circuit voltage) was measured, and shown in Table 1 below.

[Table 1]

| | Thickness of the first coating region ($\mu$m) | Thickness of the second coating region ($\mu$m) | L1 ($\mu$m) | Poros ity (%) | Discharg e capacity (mAh) | Coulombic efficiency (%) | OCV(V) after storage at 130°C |
|---|---|---|---|---|---|---|---|
| Exam ple 1 | 15 | 15 | 400 | 23 | 53 | 82 | 3.38 |
| Exam ple 2 | 14 | 14 | 200 | 24 | 52 | 81 | 3.29 |
| Exam ple 3 | 19 | 19 | 400 | 15 | 52 | 82 | 3.41 |
| Exam ple 4 | 10 | 16 | 1500 | 25 | 47 | 78 | 3.35 |
| Comp arative Exam ple 1 | - | - | - | - | 53 | 83 | 0.002 |
| Comp arative Exam ple 2 | - | - | - | - | 12 | 25 | 2.42 |
| Comp arative Exam ple 3 | 64 | 64 | 1000 | - | 50.1 | 78.3 | - |
| Comp arative Exam ple 4 | 4 | 6 | 300 | - | 38.5 | 53.9 | - |
| Comp arative Exam ple 5 | 5 | 5 | 400 | 54 | 42 | 71 | 3.21 |

* L1: the length of the second coating region measured from the tangent of the first coating region and the second coating region

As shown in Table 1, it was confirmed that the lithium secondary batteries of Examples exhibits a discharge capacity of 47 mAh or more and 53 mAh or less, and a coulombic efficiency value of 78% or more, which not only has excellent battery characteristics, but also has an OCV of 3.29 V or more after storage at 130°C, thereby being excellent in high temperature stability.

On the other hand, it can be seen that in the case of Comparative Example 1, the OCV after storage at 130°C is only 0.002V, and the polyolefin separator contracts at high temperature, which causes electrode short circuit. It was confirmed that Comparative Example 2 shows an OCV of only 2.42 V after storage at 130°C, and does not include a coating member on the edge of the electrode portion, so that the high-temperature stability is not sufficient due to the detachment phenomenon that occurs at the time of punching the electrode portion and the fine distortion that occurs during cell assembly.

In addition, it was confirmed that in the case of Comparative Example 2, the discharge capacity is 12 mAh, and the coulombic efficiency value is only 25%, and as a result of not including a coating member on the edge of the electrode portion, the detachment phenomenon that occurred at the time of punching the electrode portion may cause cell short circuits, which results in insufficient battery characteristics.

Further, it was confirmed that in the case of Comparative Example 3, the discharge capacity is 50.1 mAh, and the coulombic efficiency value is only 78.3%, and polyimide tape is used as the insulation layer, which results in insufficient battery characteristics.

Moreover, it was confirmed that in the case of Comparative Example 4, the discharge capacity appears at 38.5 mAh, and the coulombic efficiency value is only 53.9%, and that when the coating layer is formed with only the binder without inorganic particles, the battery characteristics are not sufficient. In addition, it was confirmed that two of the five mono-cells are shown to be good in the final product, indicating that mono-cell short-circuit defect rate is high.

It was confirmed that in the case of Comparative Example 5, since the porosity of the first and second coating regions exceeds 50%, stable insulation is not realized, and thus the discharge capacity and coulombic efficiency values are inferior.

**[Description of Reference Numerals]**

100: electrode portion
101: current collector
102: electrode layer
103: insulating layer
200: second electrode portion
201: second electrode layer
202: second current collector
10: first coating region
11: thickness of the first coating region
20: second coating region
21: thickness of the second coating region
30: (difference between the length in the extension direction of the electrode portion and the length in the extension direction of the second electrode portion) * 1/2
40: tangent of the first coating region and the second coating region

**Claims**

1. An electrode for a lithium secondary battery comprising:
   an electrode portion that includes,

   a current collector;
   an electrode layer formed on the current collector; and
   an insulating layer formed on the electrode layer; and
   a coating member that includes a first coating region in contact with a side surface of the electrode portion and a second coating region that continues to the first coating region and makes contact with a portion of the insulating layer.

2. The electrode according to claim 1, wherein:
   each of the first coating region and the second coating region comprises inorganic fine particles and a binder resin.

3. The electrode according to claim 1, wherein:
   a thickness of the first coating region measured from the side surface of the electrode portion is 1 $\mu$m or more and 100 $\mu$m or less.

4.  The electrode according to claim 1, wherein:
    a thickness of the second coating region measured from an interface with the insulating layer is 1 $\mu$m or more and 500 ,um or less.

5.  The electrode according to claim 1, wherein:
    a length of the second coating region measured from a tangent of the first coating region and the second coating region is 50 $\mu$m or more and 2 mm or less.

6.  The electrode according to claim 1, wherein:
    a ratio of a thickness of the second coating region measured from an interface with the insulating layer to a length of the second coating region measured from a tangent of the first coating region and the second coating region is 0.001 or more and 1.0 or less.

7.  The electrode according to claim 1, wherein:
    the coating member has a porosity of 10% or more and 50% or less.

8.  The electrode according to claim 1, wherein:
    the insulating layer has a porosity of 30% or more and 70% or less.

9.  The electrode according to claim 1, wherein:
    the insulating layer has a thickness of 10 $\mu$m or more and 30 $\mu$m or less.

10. The electrode according to claim 2, wherein:
    the inorganic fine particles include particles having a particle size of 10 nm or more and 1 $\mu$m or less.

11. The electrode according to claim 2, wherein:
    the inorganic fine particles include one or more of alumina, boehmite, aluminum hydroxide, silica, titania, zirconia, zirconium titanate, $La_2O_3$, $Y_2O_3$, $SrTiO_3$, $BaTiO_3$, magnesia, magnesium hydroxide, aluminosilicate, zeolite, LLZO, LATP, or PZT.

12. The electrode according to claim 2, wherein:
    each of the first coating region and the second coating region contains 1 part by weight or more and 100 parts by weight or less of the inorganic fine particles with respect to 100 parts by weight of the binder resin.

13. The electrode according to claim 2, wherein:
    the binder resin includes at least one of polyvinylidene fluoride, polyvinylidene fluoride-hexafluoro propylene, polyvinylidene fluoride-trichloroethylene, polyvinylidene fluoride-chlorotrifluoro ethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, or styrene butadiene rubber.

14. A lithium secondary battery comprising:

    the electrode of claim 1; and
    a second electrode portion formed on the electrode.

15. The lithium secondary battery according to claim 14, wherein:
    the second electrode portion comprises a second electrode layer and a second current collector formed on the second electrode layer.

16. The lithium secondary battery according to claim 14, wherein:
    a length in an extension direction of the electrode portion is longer than a length in an extension direction of the second electrode portion by 0.2 mm or more and 2 mm or less.

【FIG. 1】

【FIG. 2】

【FIG. 3】

【FIG. 4】

【FIG. 5】

<div align="center">

**INTERNATIONAL SEARCH REPORT**

</div>

| International application No. |
| --- |
| **PCT/KR2023/006834** |

**A. CLASSIFICATION OF SUBJECT MATTER**

**H01M 4/13**(2010.01)i; **H01M 4/04**(2006.01)i; **H01M 4/62**(2006.01)i; **H01M 4/64**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01G 4/224(2006.01); H01M 10/04(2006.01); H01M 10/052(2010.01); H01M 10/0587(2010.01); H01M 2/02(2006.01); H01M 2/08(2006.01); H01M 4/02(2006.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 집전체(current collector), 전극 (electrode), 코팅(coating), 측면(side), 절연층(insulating layer)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2007-0087857 A (SAMSUNG SDI CO., LTD.) 29 August 2007 (2007-08-29)<br>See claim 1; paragraphs [0010] and [0025]; and figures 4a-4b. | 1-16 |
| A | KR 10-2017-0034725 A (LG CHEM, LTD.) 29 March 2017 (2017-03-29)<br>See claims 1, 11-12 and 14-17; and paragraph [0138]. | 1-16 |
| A | JP 2020-527825 A (I-TEN) 10 September 2020 (2020-09-10)<br>See claims 1-5; and figures 4 and 6. | 1-16 |
| A | KR 10-1775241 B1 (TOYOTA JIDOSHA KABUSHIKI KAISHA) 05 September 2017 (2017-09-05)<br>See claim 1; paragraphs [0026]-[0029]; and figures 2 and 6. | 1-16 |
| A | CN 101425574 A (SAMSUNG SDI CO., LTD.) 06 May 2009 (2009-05-06)<br>See paragraphs [0055]-[0056]; and figure 2. | 1-16 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 August 2023** | **23 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006834**

| Patent document cited in search report | | | Publication date (day/month/year) | Patent family member(s) | | | Publication date (day/month/year) |
|---|---|---|---|---|---|---|---|
| KR | 10-2007-0087857 | A | 29 August 2007 | US | 2007-0154788 | A1 | 05 July 2007 |
| | | | | US | 7842414 | B2 | 30 November 2010 |
| KR | 10-2017-0034725 | A | 29 March 2017 | KR | 10-1874159 | B1 | 03 July 2018 |
| | | | | US | 10811670 | B2 | 20 October 2020 |
| | | | | US | 2017-0092930 | A1 | 30 March 2017 |
| JP | 2020-527825 | A | 10 September 2020 | CA | 3065287 | A1 | 03 January 2019 |
| | | | | CN | 110809830 | A | 18 February 2020 |
| | | | | CN | 110809830 | B | 15 November 2022 |
| | | | | EP | 3646398 | A1 | 06 May 2020 |
| | | | | EP | 3646398 | B1 | 18 August 2021 |
| | | | | EP | 3840110 | A1 | 23 June 2021 |
| | | | | EP | 3840110 | B1 | 13 April 2022 |
| | | | | IL | 271156 | A | 30 January 2020 |
| | | | | JP | 7277387 | B2 | 18 May 2023 |
| | | | | US | 11469464 | B2 | 11 October 2022 |
| | | | | US | 2020-0152925 | A1 | 14 May 2020 |
| | | | | WO | 2019-002768 | A1 | 03 January 2019 |
| KR | 10-1775241 | B1 | 05 September 2017 | CN | 105720228 | A | 29 June 2016 |
| | | | | CN | 105720228 | B | 28 August 2018 |
| | | | | JP | 2016-119203 | A | 30 June 2016 |
| | | | | JP | 6183348 | B2 | 23 August 2017 |
| | | | | KR | 10-2016-0075345 | A | 29 June 2016 |
| | | | | US | 10062921 | B2 | 28 August 2018 |
| | | | | US | 2016-0181652 | A1 | 23 June 2016 |
| CN | 101425574 | A | 06 May 2009 | CN | 101425574 | B | 06 July 2011 |
| | | | | EP | 2056376 | A1 | 06 May 2009 |
| | | | | EP | 2056376 | B1 | 13 May 2020 |
| | | | | JP | 2009-110928 | A | 21 May 2009 |
| | | | | JP | 5281836 | B2 | 04 September 2013 |
| | | | | KR | 10-1025277 | B1 | 29 March 2011 |
| | | | | KR | 10-2009-0043810 | A | 07 May 2009 |
| | | | | US | 2009-0111011 | A1 | 30 April 2009 |
| | | | | US | 2014-0193699 | A1 | 10 July 2014 |
| | | | | US | 8846237 | B2 | 30 September 2014 |
| | | | | US | 8986871 | B2 | 24 March 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2023006834 W
- KR 1020220063560
- KR 1020230062526